# EUROPEAN PATENT SPECIFICATION

(11) **EP 2 951 423 B1**
(45) Date of publication and mention of the grant of the patent: **07.11.2018**
(21) Application number: 14746417.6
(22) Date of filing: 27.01.2014
(51) Int. Cl.: F02M 26/10, F16L 55/04, F15D 1/02, F02M 26/13, F02M 26/05

(54) **EGR-SYSTEM, ENGINE COMPRISING SUCH SYSTEM AND VEHICLE COMPRISING SUCH ENGINE**
AGR-SYSTEM, MOTOR MIT EINEM DERARTIGEN SYSTEM UND FAHRZEUG MIT SOLCH EINEM MOTOR
SYSTÈME EGR, MOTEUR COMPRENANT UN TEL SYSTÈME ET VÉHICULE COMPRENANT UN TEL MOTEUR

(30) Priority: 31.01.2013 SE 1350107
(43) Date of publication of application: 09.12.2015
(73) Proprietor: Scania CV AB, 151 87 Södertälje (SE)
(72) Inventor: SPONTÓN, Ove, S-610 75 Västerljung (SE)
(74) Representative: Scania CV AB
(86) International application number: PCT/SE2014/050102
(87) International publication number: WO 2014/120066

(56) References cited:
- FR-A- 1 560 334
- FR-A1- 2 948 419
- JP-A- 2005 133 611
- US-A- 4 848 281
- US-B1- 6 336 471

## Description

### BACKGROUND TO THE INVENTION AND KNOWN ART

The present invention relates to an EGR system in accordance with the preamble for patent claim 1. The invention also relates to a combustion engine with such an EGR system in accordance with the preamble for patent claim 9. The invention also relates to a vehicle with such a combustion engine in accordance with the preamble for patent claim 10.

EGR systems are used to purify the waste gases from petrol and diesel engines. Nitrogen oxides are formed when the nitrogen and oxygen in the air react at the high temperatures and pressures occurring in the engine's combustion chamber. EGR, which is an abbreviation of the term exhaust gas recirculation, entails the waste gases from the engine being returned to the intake side of the engine. The waste gases will lower the combustion temperatures in the engine's combustion chamber, reducing the nitrogen oxides. On supercharged engines there are so-called long and short EGR systems. In the case of the short system the EGR system is connected with the intake system downstream of the compressor and usually downstream of a charging air cooler for the intake air, thereby resulting in the EGR system being joined to the high-pressure side of the compressor.

One advantage of using the short EGR system is to lessen the space required for the EGR system, thereby reducing the weight of the EGR system as well. The waste gases from a piston engine exit the combustion chamber during the exhaust stroke at positive pressure, causing the pressure in the engine's waste gas system to pulsate, which in turn results in the waste gas flow pulsating. Since the EGR system is connected to the engine's waste gas system, the pressure and flow of the waste gases in the EGR system will vary and thus pulsate.

On the intake side a pressure situation prevails which is considerably more even than the heavily pulsating pressure prevailing on the waste gas side. In an EGR system this results in periodically intense drive pressure in the forward direction followed by pressure in the reverse direction between the pulses of waste gas. The pressure in the reverse direction drives a return flow, which brings about a loss of power and hence increased fuel consumption since the flow in the forward direction has to contain both the working flow and the return flow. The necessary drive pressure rises, leading to an increase in the gas exchange work.

Known solutions do exist, involving check valves in the form of reed valves with which it has been attempted to solve the above problem. The drawback with reed valves in the EGR system is that they compound the pressure drop in the forward direction. In addition the environment in the EGR system is aggressive, affecting the useful life of the reed valves adversely.

The document FR-A1-2948419 shows an EGR system whose layout includes an EGR cooler and a valve. The inlet and outlet ports of the EGR cooler, and the valve together with attendant ducts, are designed to make allowance for a rear-facing flow of EGR gases in the EGR system.

### SUMMARY OF THE INVENTION

Despite known solutions in the field, there is a need to further develop an EGR system that requires a small amount of gas exchange work, has a long service life, requires little maintenance and can be manufactured at low cost. There is also a need to further develop a combustion engine with such an EGR system that works on low fuel consumption.

The aim of the present invention is to bring about an EGR system which requires a small amount of gas exchange work.

Another aim of the invention is to bring about an EGR system which has a long service life.

Another aim of the invention is to bring about an EGR system which can be manufactured at low cost.

An additional aim of the invention is to bring about a combustion engine with an EGR system that works on low fuel consumption.

These aims are achieved with an EGR system of the kind mentioned by way of introduction, which is characterized by the distinctive features set out in the characterizing part of patent claim 1.

These aims are also achieved with a combustion engine of the kind mentioned by way of introduction, which is characterized by the distinctive features stated in the characterizing part of patent claim 9.

These aims are also achieved with a vehicle of the kind mentioned by way of introduction, which is characterized by the distinctive features set out in the characterizing part of patent claim 10.

Endowing the EGR system with specially designed geometry produces a flow component with differentiated pressure drops in the forward and reverse directions, respectively, by forming a segregation by means of a sharp edge, and hence a virtual wall in the form of a vortex. The position of the vortex and the effect of the same are different in the forward and reverse directions, respectively. This reduces the return flow and hence the need for drive pressure in the forward direction, resulting in lower fuel consumption thanks to less gas exchange work.

The entire solution is based on passive geometry without moving parts, which by virtue of its design exploits the flow phenomenon to emulate a check valve.

By choosing a suitable array of geometric parameters to include in the EGR system, the geometry created affects the flow of EGR gases in the duct, forming a virtual wall in the direction of the flow, resulting in the flow of EGR gases altering their geometry as experienced by the EGR gases. When the EGR gases stream in the direction of flow, a vortex is created in the transitional section of the duct and for the EGR gases the vortex will be perceived as a virtual wall. When the EGR gases flow in the reverse direction, a second virtual wall will be formed in the first duct section. The second virtual wall has an obstructive impact on the flow of the EGR gases in the reverse direction, which will reduce the return flow and thus the need for drive pressure in the forward direction, bringing about lower fuel consumption when operating the combustion engine and the vehicle.

Additional advantages of the invention are brought out in the following detailed description.

### BRIEF DESCRIPTION OF THE DRAWINGS

By way of example, a preferred embodiment of the invention is described below, with reference to attached drawings, on which:
Fig. 1 shows a schematic side-on view of a vehicle 1, which includes a combustion engine with an EGR system according to the present invention,
Fig. 2 shows a schematic view of a combustion engine with an EGR system according to the present invention,
Fig. 3 shows a sectional view of a duct in the EGR system according to the present invention with waste gases flowing in the forward direction, and
Fig. 3a shows a detailed view of Fig. 3 in the area between the first duct section and the transitional section, and
Fig. 4 shows a sectional view of a duct in the EGR system according to the present invention with waste gases flowing in the reverse direction.

### DETAILED DESCRIPTION OF ONE EMBODIMENT OF THE INVENTION

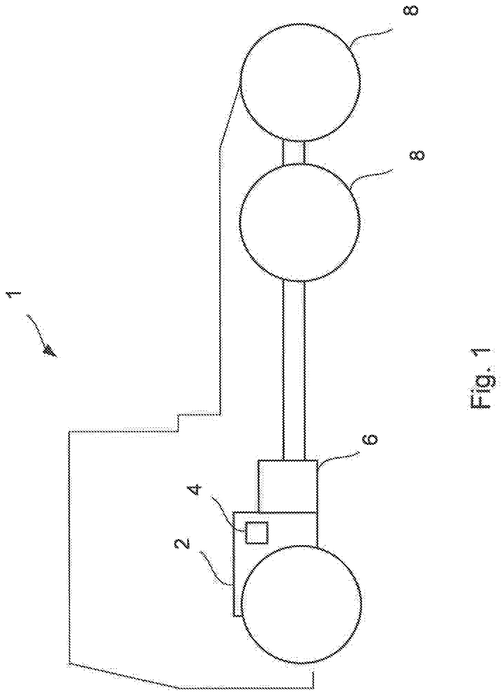

Fig. 1 shows a schematic side-on view of a vehicle 1, which includes a combustion engine 2 with an EGR system 4 according to the present invention. The combustion engine 2 is connected to a gearbox 6 and the gearbox 6 is further connected to the vehicle's 1 driving gear 8. The combustion engine 2 is preferably a piston engine.

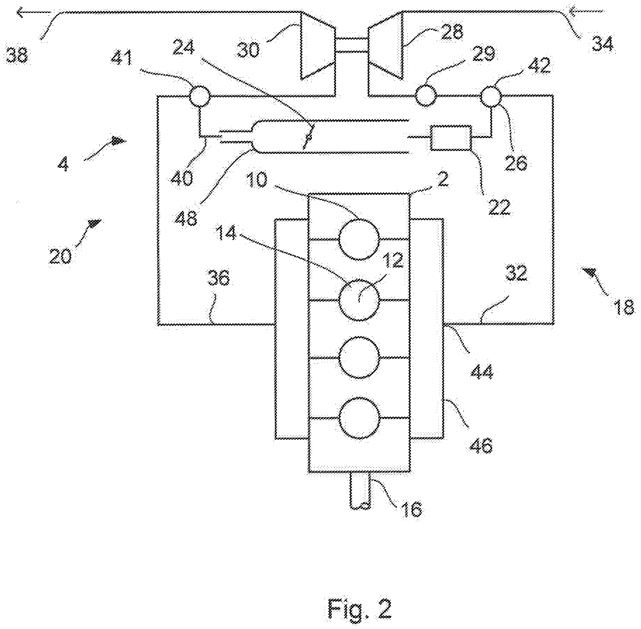

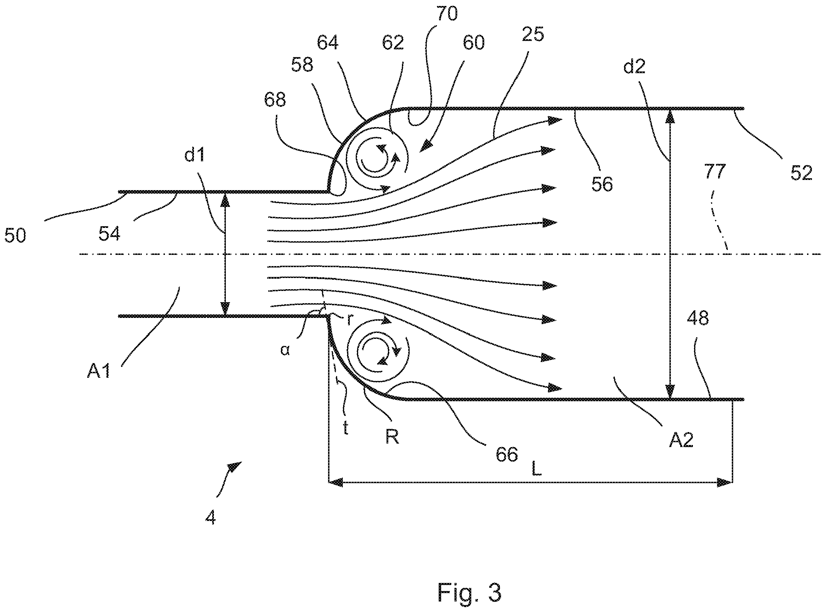

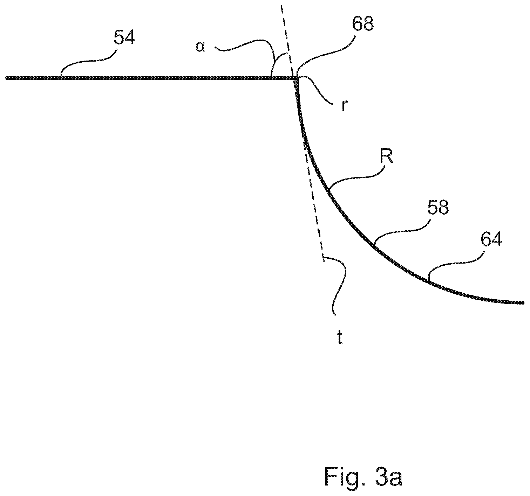

Fig. 2 shows a schematic view of a combustion engine 2 with an EGR system 4 according to the present invention. In accordance with the embodiment example shown, the combustion engine 2 has four cylinders 10, each cylinder 10 housing a piston 12 and a combustion chamber 14. The engine 2 also presents an output shaft 16. The combustion engine 2 includes an intake system 18 for supplying air to the combustion chamber 14 and a waste gas system 20 for purging waste gases from the combustion chamber 14. Between the intake system 18 and the waste gas system 20 the EGR system 4 is laid out. The EGR system 4 is connected to the waste gas system 20 and an EGR valve 24 controls the volume of waste gases supplied to the EGR system 4 in the form of EGR gases 25, see Fig. 3. With an eye to increasing engine output it is possible to arrange an EGR cooler 22 in the EGR system 4 so that the EGR gases 25 are cooled before being supplied with the intake air from a compressor 28. The EGR system 4 is connected to the intake system 18 downstream of the EGR cooler 4 arranged in the EGR system 22 at a juncture point 26 where the EGR gases 25 are added to the air in the intake system 18. The EGR valve 24 can be arranged upstream or downstream of the EGR cooler 22. The EGR system 4 is connected to the intake system 18 downstream of the compressor 28, resulting in the EGR system 4 being connected to the high-pressure side of the compressor 28. A valve component 29 is arranged in the intake system 18 downstream of the compressor 28, which valve component 29 controls the volume of air supplied to the combustion engine 2. The valve component 29 is connected to a throttle control, not shown, actuated by the driver of the vehicle 1.

In accordance with the embodiment example of the engine's 2 waste gases shown, the compressor 28 is powered via a turbine 30 connected to the waste gas system 20. The intake system 18 is preferably constructed from piping and hosing 32, which conveys the ingested, surrounding air from an intake port 34 through the compressor 28 and finally to the engine's 2 combustion chamber 14. The waste gas system 20 is preferably constructed from piping 36, which conveys the hot waste gases from the combustion engine's 2 combustion chamber 14, through the turbine 30 and on out to the surroundings via a waste gas pipe aperture 38. The EGR system 4 is also made up of pipes 40 which convey the waste gases from a juncture point 41 via the EGR valve 24 and the EGR cooler 22 on to a connection device 42 at the juncture point 26 where the EGR gases 25 are fed the air in the intake system 18. The EGR system 4 includes a duct 48, which will be described in more detail below. The EGR gases 25 are supplied and thus mixed with the intake air at the juncture point 26 and conveyed onwards in the intake system 18 to a branch point 44 where the blended EGR gases 25 and the intake air enter an inlet pipe 46, which conveys the blended EGR gases 25 and the intake air on to the respective combustion chamber 14. The distance between the juncture point 26 and the branch point 44 is between 0 mm and 500 mm, preferably between 100 mm and 250 mm.

Fig. 3 shows a sectional view of the duct 48 in the EGR system 4 according to the present invention, with EGR gases 25 flowing in the forward direction. The duct 48 includes an inlet port 50 and an outlet port 52. Forward direction means the direction from the inlet port 50 to the outlet port 52. The duct 48 includes a first duct section 54 with a first cross-sectional area A1, a second duct section 56 with a second cross-sectional area A2 and a transitional section 58 arranged between the first and second duct sections 54, 56, designed such that a first virtual wall 60 is formed by the EGR gases 25 in the transitional section 58 when the EGR gases 25 flow in the direction from the inlet to the outlet ports 50, 52. The first virtual wall 60 is made up of a first vortex 62 formed by the EGR gases 25.

The EGR system's 4 duct 48 has an essentially even inner surface 70 and is essentially straight, displaying an essentially circular cross-section in order to transmit the pulse energy in the waste gases through the EGR system 4 with maximum output and minimal losses. Thus the first and second duct sections 54, 56 and the transitional section 58 have a preferentially circular cross-section where the minimum diameter of the transitional section 58 corresponds to the diameter d1 of the first duct section 54 and the largest diameter of the transitional section 58 corresponds to the diameter d2 of the second duct section 56. However, the duct 48 of the EGR system 4 can present an arbitrary form seen in the cross-sectional direction.

The transitional section 58 includes a curved wall 64 with an essentially smooth inner surface 66. The connection between the first duct section 54 and the transitional section 58 forms a sharp edge 68, which has a radius r that is preferably smaller than 0.15 times the diameter d1 of the first duct section 54, which is to say r < 0.15 x d1. In order for the first vortex 62 to form optimally, the curved wall 64 of the transitional section 58 has a radius R within the range of 0.1 times the second duct section's 56 diameter d2 to 0.5 times the diameter d2, i.e. 0.1 x d2 ≤ R ≤ 0.5 x d2. The transitional section's 58 curved wall 64 preferably has a radius R within the range of 0.2 times the diameter d2 to 0.3 times the diameter d2, i.e. 0.2 x d2 ≤ R ≤ 0.3 x d2. At the point of the transitional section's 58 connection to the first duct section 54 the curved wall 64 can present an essentially flat section at an angle corresponding to the angle α at a tangent t to the curved wall 64. The size of the angle α is within the range of 30-90 degrees, preferably in the range 45°-60°. The connection between the second duct section 56 and the transitional section 58 forms an essentially even surface 70.

Fig. 3a shows a detailed view of Fig. 3 in the area between the first duct section 54 and the transitional section 58, showing how the connection between the first duct section 54 and the transitional section 58 forms a sharp edge 68 with the radius r, and also showing how the curved wall 64 at the transitional section's 58 connection with the first duct section 54 can present an essentially flat section at an angle corresponding to the angle α at a tangent to the curved wall 64.

The transitional section 58 and the second duct section 56 have a combined length L which is greater than the second duct section's 56 diameter d2, preferably within the range of 2 to 3 times the second duct section's 56 diameter d2, which is shown in Fig. 3. This produces a combined length L in the transitional section 58 and the second duct section 56, which length L is sufficient not only to accommodate the first vortex 62 formed by the EGR gases 25 but also to recover the attached flow of EGR gases in the second duct section 56. The first cross-sectional area A1 is preferably smaller than the second cross-sectional area A2 and the relationship between the second and the first cross-sectional areas A2, A1 is within the range of 2-15, i.e. 2 ≤ A2/A1 ≤ 15. The relationship between the second and the first cross-sectional areas A2, A1 is preferably within the range of 4-8, i.e. 4 ≤ A2/A1 ≤ 8.

Since the combustion engine 2 is a piston engine, the pressure in the engine's 2 waste gas system 20 will vary and pulsate, which in turn will lead to the waste gas flow varying and pulsating. Since the EGR system 4 is connected to the engine's 2 waste gas system 20, the pressure and flow of the waste gases in the EGR system 4 will vary and thus pulsate. With a view to avoiding the EGR system 4 equalizing the pressure and flow variations in the waste gases when the EGR gases 25 pass through the EGR system 4 the first vortex 62, which forms the first virtual wall 60, results in the flow resistance being minimized through the duct 48.

The pressure and flow of the waste gases varies and pulsates downstream of the transitional section 58. The pulse energy occurring in the EGR gases 25 is conducive to a good remixing effect of EGR gases 25 and intake air from the surroundings, so that a homogenous and uniform mixture of EGR gases 25 and intake air in all the combustion engine's 2 combustion chambers 14 is obtained. This achieves an essentially uniform output from all the engine's 2 cylinders 10, which results in the combustion engine's 2 performance increasing and the emissions in the engine's 2 waste gases decreasing. The pulse energy occurring in the EGR gases 25 is not obstructed by the first vortex 62.

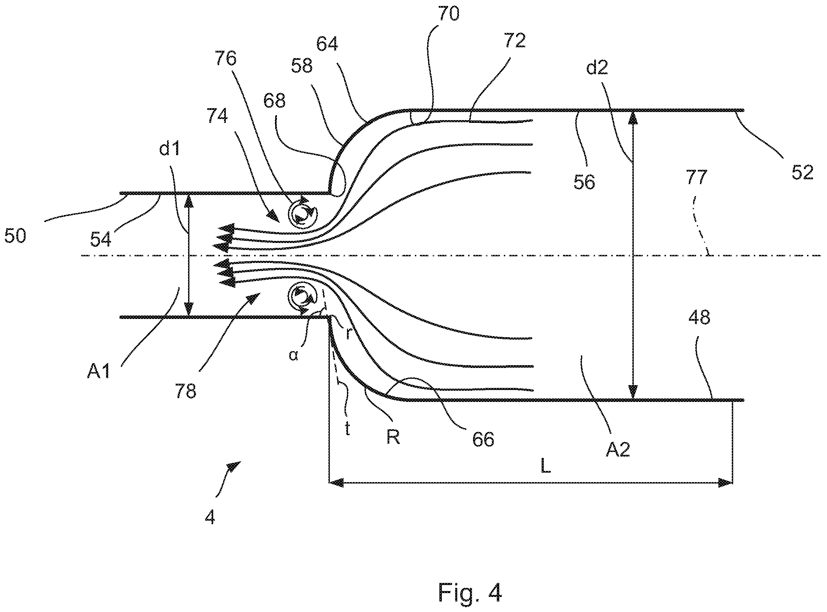

Fig. 4 shows a sectional view of the duct 48 in the EGR system 4 according to the present invention with a return flow 72 flowing in the reverse direction. Reverse direction means the direction from the outlet port 52 to the inlet port 50. In the EGR system 4 there is periodically powerful drive pressure from EGR gases 25 in the forward direction, accompanied by pressure in the reverse direction between the waste gas pulses. The pressure in the reverse direction drives the return flow 72 in the EGR system 4, which has to be overcome by the flow in the forward direction. As a result of the above geometry in the first and second duct sections 54, 56 and the transitional section 58, when the direction of the return flow 72 is from the outlet port 52 to the inlet port 50, a second virtual wall 74 will be formed in the first duct section 54. The second virtual wall 74 is made up of a second vortex 76 formed by the return flow 72. The second virtual wall 74 has an obstructive effect on the return flow 72 in the reverse direction, which will reduce the return flow 72 and hence also reduce the need for the EGR gases' 25 drive pressure in the forward direction, thereby achieving lower fuel consumption when operating the combustion engine 2 and the vehicle 1.

Where the first and second duct sections 54, 56 and the transitional section 58 have a circular cross-section, the first and second vortices 62, 76 making up the first and second virtual walls 60, 74 will present a shape corresponding to a toroid spreading out around a midline 77 in the duct 48. The first vortex 62 making up the first virtual wall 60 will then facilitate the flow of the EGR gases 25 in the forward direction while the second vortex 76 making up the second virtual wall 74 will form a constriction 78 in the first duct section 54, which has an obstructive effect on the return flow 72 in the reverse direction.

Within the framework of the invention, the components and distinctive features stated above can be combined between various embodiments stated.

## Claims

1. EGR system, comprising a duct (48) with an inlet port (50) arranged to be connected to a waste gas system (20) of a combustion engine (2), and an outlet port (52), arranged to be connected to an intake system (18) of the combustion engine (2), which duct (48) includes a first duct section (54) with a first cross-sectional area (A1), which first duct section (54) is connected to the inlet port (50), a second duct section (56) with a second cross-sectional area (A2), which second duct section (56) is connected to the outlet port (52) and a transitional section (58) arranged between the first and second duct sections (54, 56), **characterized in that** the transitional section (58) includes a curved wall (64) and **in that** the connection between the first duct section (54) and the transitional section (58) forms a sharp edge (68), so that a first virtual wall (60) is formed by EGR gases (25) in the transitional section (58) when the EGR gases (25) flow in the direction from the inlet port (50) to the outlet port (52) and a second virtual (74) wall is formed by a return flow (72) in the first duct section (54) when the return flow (72) flows from the outlet port (52) to the inlet port (50), which first and second virtual walls (60, 74) are made up of a first and second vortex (62, 76) formed by the EGR gases (25) or, respectively, the return flow (72), wherein the transitional section (58) has an essentially circular cross-section, and wherein the first and second duct sections (54, 56) have circular cross-sections, and the transitional section's (58) minimum diameter corresponds with the first duct section's (54) diameter (d1) and the transitional section's (58) greatest diameter corresponds with the second duct section's (56) diameter (d2).

2. EGR system according to claim 1, **characterized in that** the transitional section (58) has an essentially smooth inner surface (66).

3. EGR system according to any of the preceding claims, **characterized in that** the sharp edge (68) has a radius (r) which is preferably less than 0.15 times the first duct section's (54) diameter (d1), i.e. r < 0.15 x d1.

4. EGR system according to any of the preceding claim, **characterized in that** the connection between the second duct section (56) and the transitional section (58) forms an essentially even surface (70).

5. EGR system according to any of the preceding claims, **characterized in that** the transitional section (58) has a radius of curvature (R) within the range of 0.1 times the second duct section's (56) diameter (d2) to 0.5 times the diameter (d2), preferably within the range of 0.2 times the diameter (d2) to 0.3 times the diameter (d2), i.e. 0.1 x d2 ≤ R ≤ 0.5 x d2, preferably 0.2 x d2 ≤ R ≤ 0.3 x d2.

6. EGR system according to any of the preceding claims, **characterized in that** the transitional section (58) and the second duct section (56) have a combined length (L) greater than the second duct section's (56) diameter (d2), preferably within the range of 2 to 3 times the second duct section's (56) diameter (d2).

7. EGR system according to any of the preceding claim, **characterized in that** the first cross-sectional area (A1) is smaller than the second cross-sectional area (A2).

8. EGR system according to claim 7, **characterized in that** the relationship between the second and the first cross-sectional areas (A2, A1) is within the range of 2-15, preferably within the range of 4-8.

9. Combustion engine, including an intake system (18) to supply air to a combustion chamber (14) and a waste gas system (20) to purge waste gases from the combustion chamber (14), **characterized in that** an EGR system (4) according to any of claims 1-8 is arranged between the intake system (18) and the waste gas system (20).

10. Vehicle (1), **characterized in that** it includes a combustion engine (2) according to claim 9.

## Patentansprüche

1. EGR-System, umfassend einen Kanal (48) mit einer Einlassöffnung (50), die dazu eingerichtet ist, mit einem Abgassystem (20) eines Verbrennungsmotors (2) verbunden zu werden, und einer Auslassöffnung (52), die dazu eingerichtet ist, mit einem Ansaugsystem (18) des Verbrennungsmotors (2) verbunden zu werden, wobei der Kanal (48) einen ersten Kanalabschnitt (54) mit einer ersten Querschnittsfläche (A1), der mit der Einlassöffnung (50) verbunden ist, einen zweiten Kanalabschnitt (56) mit einer zweiten Querschnittsfläche (A2), der mit der Auslassöffnung (52) verbunden ist, und einen Übergangsabschnitt (58) umfasst, der zwischen dem ersten und dem zweiten Kanalabschnitt (54, 56) angeordnet ist, **dadurch gekennzeichnet, dass** der Übergangsabschnitt (58) eine gekrümmte Wand (64) umfasst, und dadurch, dass die Verbindung zwischen dem ersten Kanalabschnitt (54) und dem Übergangsabschnitt (58) eine scharfe Kante (68) derart ausbildet, dass eine erste virtuelle Wand (60) von EGR-Gasen (25) in dem Übergangsabschnitt (58) gebildet wird, wenn die EGR-Gase (25) in die Richtung von der Einlassöffnung (50) zu der Auslassöffnung (52) fließen, und eine zweite virtuelle Wand (74) von einem Rückfluss (72) in dem ersten Kanalabschnitt (54) gebildet wird, wenn der Rückfluss (72) von der Auslassöffnung (52) zu der Einlassöffnung (50) fließt, wobei die erste und die zweite virtuelle Wand (60, 74) von einem ersten und einem zweiten Wirbel (62, 74) ausgebildet werden, die von den EGR-Gasen (25) bzw. von dem Rückfluss (72) gebildet sind, wobei der Übergangsabschnitt (58) einen im Wesentlichen kreisförmigen Querschnitt aufweist, und wobei der erste und der zweite Kanalabschnitt (54, 56) kreisförmige Querschnitte aufweisen, wobei ein minimaler Durchmesser des Übergangsabschnitts (58) dem Durchmesser (d1) des ersten Kanalabschnitts (54) und ein größter Durchmesser des Übergangsbereichs (58) dem Durchmesser (d2) des zweiten Kanalabschnitts (56) entspricht.

2. EGR-System gemäß Anspruch 1, **dadurch gekennzeichnet, dass** der Übergangsabschnitt (58) eine im Wesentlichen glatte innere Oberfläche (66) aufweist.

3. EGR-System gemäß einem der vorhergehenden Ansprüche, **dadurch gekennzeichnet, dass** die scharfe Kante (68) einen Radius (r) aufweist, der vorzugsweise kleiner ist als ein 0,15-Faches des Durchmessers (d1) des ersten Kanalabschnitts (54), d. h. r < 0,15 x d1.

4. EGR-System gemäß einem der vorhergehenden Ansprüche, **dadurch gekennzeichnet, dass** die Verbindung zwischen dem zweiten Kanalabschnitt (56) und dem Übergangsabschnitt (58) eine im Wesentlichen gleichmäßige Oberfläche (70) ausbildet.

5. EGR-System gemäß einem der vorhergehenden Ansprüche, **dadurch gekennzeichnet, dass** der Übergangsabschnitt (58) einen Krümmungsradius (R) innerhalb des Bereichs von einem 0,1-Fachen des Durchmessers (d2) des zweiten Kanalabschnitts (56) bis zu einem 0,5-Fachen des Durchmessers (d2) aufweist, vorzugsweise innerhalb des Bereichs von einem 0,2-Fachen des Durchmessers (d2) bis zu einem 0,3-Fachen des Durchmessers (d2), d. h. 0,1 x d2 ≤ R ≤ 0,5 x d2, vorzugsweise 0,2 x d2 ≤ R ≤ 0,3 x d2.

6. EGR-System gemäß einem der vorhergehenden Ansprüche, **dadurch gekennzeichnet, dass** der Übergangsabschnitt (58) und der zweite Kanalabschnitt (56) eine kombinierte Länge (L) aufweisen, die größer ist als der Durchmesser (d2) des zweiten Kanalabschnitts (56), vorzugsweise innerhalb des Bereichs eines 2-Fachen bis 3-Fachen des Durchmessers (d2) des zweiten Kanalabschnitts (56).

7. EGR-System gemäß einem der vorhergehenden Ansprüche, **dadurch gekennzeichnet, dass** die erste Querschnittsfläche (A1) kleiner ist als die zweite Querschnittsfläche (A2).

8. EGR-System gemäß Anspruch 7, **dadurch gekennzeichnet, dass** das Verhältnis zwischen der zweiten und der ersten Querschnittsfläche (A2, A1) innerhalb des Bereichs von 2-15 liegt, vorzugsweise innerhalb des Bereichs von 4-8.

9. Verbrennungsmotor, umfassend ein Ansaugsystem (18) zur Bereitstellung von Luft für eine Verbrennungskammer (14) und ein Abgassystem (20) zum Abführen von Abgasen aus der Verbrennungskammer (14), **dadurch gekennzeichnet, dass** ein EGR-System (4) gemäß einem der Ansprüche 1 bis 8 zwischen dem Ansaugsystem (18) und dem Abgassystem (20) angeordnet ist.

10. Fahrzeug (1), **dadurch gekennzeichnet, dass** es einen Verbrennungsmotor (2) gemäß Anspruch 9 umfasst.

## Revendications

1. Système EGR, comprenant une conduite (48) ayant un orifice d'entrée (50) conçu pour être connecté à un système d'évacuation des gaz de combustion (20) d'un moteur à combustion (2), et un orifice de sortie (52) conçu pour être connecté à un système d'admission (18) du moteur à combustion (2), laquelle conduite (48) comportant un premier tronçon de conduite (54) ayant une première aire en section droite (A1), lequel premier tronçon de conduite (54) étant connecté à l'orifice d'entrée (50), un deuxième tronçon de conduite (56) ayant une deuxième aire en section droite (A2), lequel deuxième tronçon de conduite (56) étant connecté à l'orifice de sortie (52), et un tronçon de transition (58) disposé entre les premier et deuxième tronçons de conduite (54, 56),
**caractérisé en ce que** le tronçon de transition (58) comporte une paroi courbe (64) et **en ce que** la connexion entre le premier tronçon de conduite (54) et le tronçon de transition (58) forme une arête vive (68), de telle sorte qu'un premier mur virtuel (60) soit formé par des gaz EGR (25) dans le tronçon de transition (58) lorsque les gaz EGR (25) circulent dans la direction allant de l'orifice d'entrée (50) à l'orifice de sortie (52) et qu'un deuxième mur virtuel (74) soit formé par un flux de retour (72) dans le premier tronçon de conduite (54) lorsque le flux de retour (72) circule de l'orifice de sortie (52) vers l'orifice d'entrée (50), lesquels premier et deuxième murs virtuels (60, 74) étant constitués d'un premier et d'un deuxième vortex (62, 76) formés par les gaz EGR (25) ou, respectivement, le flux de retour (72), le tronçon de transition (58) ayant une section droite essentiellement circulaire, et le premier et le deuxième tronçons de conduite (54, 56) ayant des sections droites circulaires, et le diamètre minimal du tronçon de transition (58) correspond au diamètre (d1) du premier tronçon (54) et le plus grand diamètre du tronçon de transition (58) correspond au diamètre (d2) du deuxième tronçon de conduite (56).

2. Système EGR selon la revendication 1, **caractérisé en ce que** le tronçon de transition (58) a une surface interne essentiellement lisse (66).

3. Système EGR selon l'une quelconque des revendications précédentes, **caractérisé en ce que** l'arête vive (68) a un rayon (r) qui est de préférence inférieur à 0,15 fois le diamètre (d1) du premier tronçon de conduite (54), c'est-à-dire que r < 0,15 x d1.

4. Système EGR selon l'une quelconque des revendications précédentes, **caractérisé en ce que** la connexion entre le deuxième tronçon de conduite (56) et le tronçon de transition (58) forme une surface essentiellement uniforme (70).

5. Système EGR selon l'une quelconque des revendications précédentes, **caractérisé en ce que** le tronçon de transition (58) a un rayon de courbure (R) compris dans la plage s'étendant de 0,1 fois le diamètre (d2) du deuxième tronçon de conduite (56) à 0,5 fois le diamètre (d2), de préférence dans la plage s'étendant de 0,2 fois le diamètre (d2) à 0,3 fois le diamètre (d2), c'est-à-dire que 0,1 x d2 ≤ R ≤ 0,5 x d2, de préférence 0,2 x d2 ≤ R ≤ 0,3 x d2.

6. Système EGR selon l'une quelconque des revendications précédentes, **caractérisé en ce que** le tronçon de transition (58) et le deuxième tronçon de conduite (56) ont une longueur combinée (L) supérieure au diamètre (d2) du deuxième tronçon de conduite (56), de préférence dans la plage s'étendant de 2 à 3 fois le diamètre (d2) du deuxième tronçon de conduite (56).

7. Système EGR selon l'une quelconque des revendications précédentes, **caractérisé en ce que** la première aire en section droite (A1) est plus petite que la deuxième aire en section droite (A2).

8. Système EGR selon la revendication 7, **caractérisé en ce que** la relation entre la deuxième et la première aires en section droite (A2, A1) est comprise dans la plage s'étendant de 2 à 15, de préférence dans la plage s'étendant de 4 à 8.

9. Moteur à combustion, comportant un système d'admission (18) pour amener de l'air à une chambre de combustion (14) et un système d'évacuation des gaz de combustion (20) pour purger des gaz de combustion de la chambre de combustion (14), **caractérisé en ce qu'**un système EGR (4) selon l'une quelconque des revendications 1 à 8 est disposé entre le système d'admission (18) et le système d'évacuation des gaz d'échappement (20).

10. Véhicule (1), **caractérisé en ce qu'**il comprend un moteur à combustion (2) selon la revendication 9.
